# EUROPÄISCHE PATENTANMELDUNG

(11) **EP 1 645 779 A2**
(43) Veröffentlichungstag der Anmeldung: **12.04.2006**
(21) Anmeldenummer: 05020064.1
(22) Anmeldetag: 15.09.2005
(51) Int. Cl.: F16H 7/12

(54) **Spannrollenanordnung für einen Endlostrieb an einer Brennkraftmaschine, insbesondere Linearspanner für Keilrippenriemen**

(30) Priorität: 09.10.2004 DE 102004049295
(71) Anmelder: Bayerische Motorenwerke Aktiengesellschaft, 80809 München (DE)
(72) Erfinder: Dembinski, Norbert, 81739 München (DE); Spiess, Thomas, 81825 München (DE)

(57) **Zusammenfassung**

Die Erfindung betrifft eine Spannrollenanordnung für einen Endlostrieb an einer Brennkraftmaschine, insbesondere einen Linearspanner für Keilrippenriemen, umfassend ein mit der Brennkraftmaschine starr verbundenes Abstützteil (6a, 6b), ein mit dem Abstützteil einstellbar verbundenes Lagerteil (1), eine in dem Lagerteil drehbar gelagerte Spannrolle (3) und ein sich am Abstützteil und am Lagerteil abstützendes Stellbauteil (9). Im Abstützteil (6b) und im Lagerteil (1) sind zwei Bohrungen angeordnet, deren Achsen zur Drehachse der Spannrolle rechtwinklig sind, wobei eine der beiden Bohrungen als Gewindebohrung ausgebildet ist. Das Stellbauteil ist als Stellschraube (9) ausgebildet, die durch die Bohrung hindurch in die Gewindebohrung einschraubbar ist, wobei der Kopf der Stellschraube an dem die Bohrung aufweisenden Teil (Lagerteil oder Abstützteil) anliegt. An dem Lagerteil (1) und an dem Abstützteil (6a) sind zur Drehachse der Stellschraube (9) parallele Anlageflächen angeordnet. In einem Teil (Lagerteil oder Abstützteil) ist ein zur Achse der Stellschraube paralleles Langloch (4) angeordnet, und in dem anderen Teil (Abstützteil oder Lagerteil) ist eine mit dem Langloch deckungsgleiche Gewindebohrung (7a) angeordnet. In die Gewindebohrung (7a) ist ein das Langloch (4) durchsetzender Führungsbolzen (8) eingeschraubt.

## Beschreibung

Die Erfindung betrifft eine Spannrollenanordnung für einen Endlostrieb an einer Brennkraftmaschine, insbesondere einen Linearspanner für Keilrippenriemen, umfassend ein mit der Brennkraftmaschine starr verbundenes Abstützteil, ein mit dem Abstützteil einstellbar verbundenes Lagerteil, eine in dem Lagerteil drehbar gelagerte Spannrolle und ein sich am Abstützteil und am Lagerteil abstützendes Stellbauteil.

Bei modernen Brennkraftmaschinen ist der zum Antrieb der verschiedenen Nebenaggregate dienende Endlostrieb als Keilrippenriemen ausgebildet. Es sind zwei verschiedene Bauarten von Keilrippenriemen bekannt. Herkömmliche("konventionelle") Keilrippenriemen besitzen einen hohen E-Modul und sind somit nahezu dehnungsfrei, wogegen sogenannte "Elast-Keilrippenriemen" einen niedrigen E-Modul aufweisen und daher stark dehnbar sind.

Herkömmliche bzw. "konventionelle" unelastische Keilrippenriemen werden lastfrei aufgelegt. Die Vorspannkraft wird mittels spezieller Feder-Spanneinrichtungen (Dreh, Zug- und Druckfeder) aufgebracht. Hierbei erfüllt das Federspannsystem eine dreifache Funktion
- Ausgleich der Herstell- bzw. Fertigungstoleranzen (Riemen, Aggregate und Trägersysteme),
- Längenausgleich und Überlastsicherung bei dynamischem Betriebsverhalten,
- Aufbringen einer exakt vordefinierten Vorspannkraft über die Lebensdauer des Riemens.

Eine Spannrollenanordnung der eingangs genannten Bauart ist aus der DE 198 31 864 A1 bekannt. Dabei ist das Lagerteil als Winkelhebel ausgebildet, an dessen einem Ende die Spannrolle gelagert ist und an dessen anderem Ende sich ein elastisch vorgespanntes Spannelement abstützt.

Derartige Spanneinrichtungen sind teuer, haben ein erhebliches Gewicht und benötigen wegen der erforderlichen Verschwenkbarkeit viel Bauraum.

Die modernen Elast-Keilrippenriemen können wegen ihrer spezifischen Fähigkeiten (flache Federkennlinie, Dämpfungseigenschaften) die vorstehend genannten Funktionen einer Spanneinrichtung übernehmen, so daß diese entfallen kann. Die Montage derartiger Elast-Keilrippenriemen erfordert jedoch besonders konzipierte, kostspielige Werkzeuge zum Aufziehen der Elast-Keilrippenriemen in gedehntem Zustand. Die Montage der Elast-Keilrippenriemen ist auch recht zeitaufwendig, und es ist eine permanente Überwachung der Prozeßparameter erforderlich. Da der Dehnvorgang beim Aufziehen des Keilrippenriemens sehr hohe Spannkräfte erfordert, müssen spezielle Arretiersysteme bedient werden, um eine Verletzungsgefahr auszuschließen. Ein entscheidender Nachteil besteht auch darin, daß solche Elast-Riemen nur in der ersten Riemenebene aufgezogen werden können. Irgendwelche Eigenheiten (z. B. Kupplungen) der anzutreibenden Aggregate können eine bis an die Elastizitätsgrenze gehende Überdehnung des Riemens erforderlich machen.

Der Erfindung liegt die Aufgabe zugrunde, eine Spannrollenanordnung der eingangs genannten Art zu schaffen, die mit geringen Kosten herstellbar ist, ein geringes Gewicht hat, an die jeweils vorhandenen Bauraum angepaßt und mit einfachen Mitteln montiert werden kann.

Eine diesen Anforderungen entsprechende Spannrollenanordnung ist im Patentanspruch 1 angegeben.

Die erfindungsgemäße Spannrollenanordnung bringt folgende Vorteile:
a) Geringe Stückkosten (es kann eine Standardlaufrolle verwendet werden, und das Lagerteil kann als Stanzbiegeteil ausgeführt sein);
b) Es ist kein besonders ausgebildetes Montagewerkzeug erforderlich;
c) unkomplizierte und leicht verständliche Handhabung;
d) geringes Gewicht;
e) geringer Bauraumbedarf;
f) Riemenscheiben und Peripherie werden bei der Montage nicht beschädigt (kein Eingriff von Serien- oder Kundendienstwerkzeugen nötig);
g) Elastriemen können in jeder Riemenebene montiert werden, weil die Spannrollenanordnung erst nach der Montage aktiviert wird. Die Gestaltung der Riemenscheiben unterliegt keinen Einschränkungen (hoher Anlaufbund, Kupplungsüberbau u. s. w.);
h) gleichmäßige Dehnung des Riemens bei der Montage. Der maximal zulässige Spannwert im linear elastischen Bereich ist ohne Überdehnung des Riemens erreichbar;
i) da beim Auflegen des Riemens eine Überstreckung unterbleibt, wird ein größerer nutzbarer "Arbeitsbereich" des Riemens erreicht. Damit werden auch Nutzungen von Elastriemen in längeren Riementrieben (z. B. Dreiecks- und Serpentinentrieb) möglich.

Zweckmäßige Weiterbildungen der Erfindung ergeben sich aus den Unteransprüchen.

Einige Ausführungsbeispiele der Erfindung sind in den Zeichnungen dargestellt und werden nachfolgend näher erläutert. Es zeigen:
Fig. 1a, b und c einen Längsschnitt und perspektivische Darstellungen einer ersten Ausführungsform der Erfindung im Montagezustand bzw. im Betriebszustand,
Fig. 2a, b und c einen Längsschnitt und perspektivische Darstellungen einer zweiten Ausführungsform der Erfindung im Montagezustand bzw. im Betriebszustand,
Fig. 3a, b und c einen Längsschnitt und perspektivische Darstellungen einer dritten Ausführungsform der Erfindung im Montagezustand bzw. im Betriebszustand, und
Fig. 4a, b und c einen Längsschnitt und perspektivische Darstellungen einer vierten Ausführungsform der Erfindung im Montagezustand bzw. im Betriebszustand.

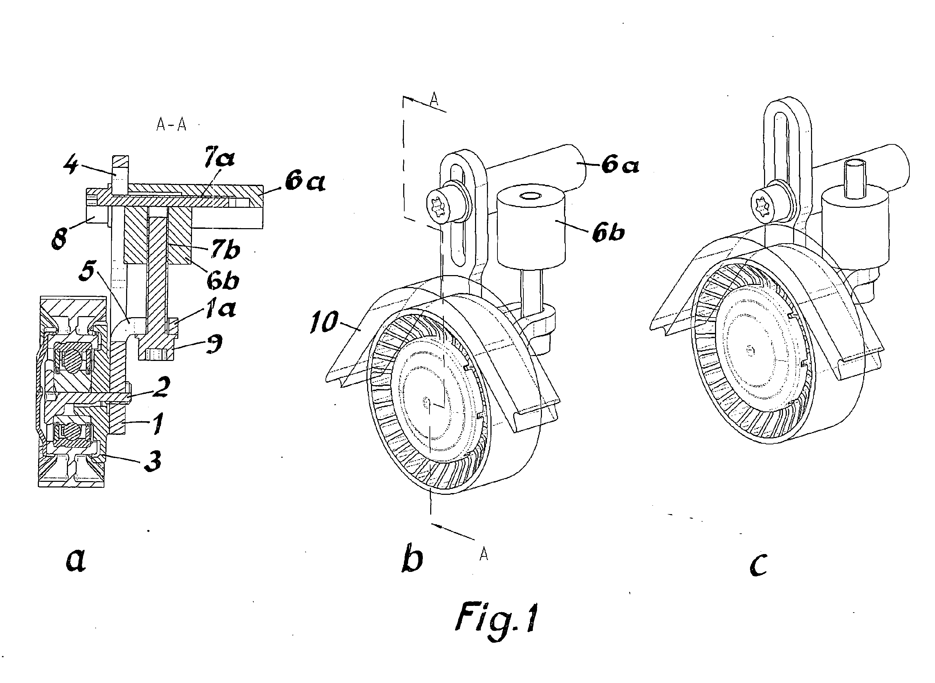

Die in Fig. 1 gezeigte Spannrollenanordnung besteht im wesentlichen aus einem Winkelblech 1, in das ein Lagerbolzen 2 eingeschraubt ist, auf dem eine Spannrolle 3 drehbar gelagert ist. Die Spannrolle 3 kann eine glatte oder eine profilierte Umfangsfläche haben. Im Hauptbereich des Winkelblechs 1 ist ein Langloch 4 ausgebildet, und in dem abgewinkelten Schenkel 1a des Winkelblechs 1 ist ein Ausschnitt 5 ausgebildet. Zur Befestigung des Winkelblechs 1 dienen zwei Vorsprünge 6a, 6b eines mit dem Zylinderblock einer Brennkraftmaschine zu verbindenden (nicht gezeigten) Bauteils, wie z. B. ein Kettenkastendeckel. Die beiden Vorsprünge 6a, 6b sind mit Anlageflächen für den Hauptabschnitt bzw. für den abgewinkelten Schenkel 1a des Winkelblechs 1 versehen, die zueinander rechtwinklig sind. Die beiden Vorsprünge 6a, 6b sind ferner mit Gewindebohrungen 7a, 7b versehen, die zum Lagerbolzen 2 der Spannrolle 3 parallel bzw. rechwinklig sind. In die Gewindebohrung 7a des Vorsprungs 6a ist eine das Langloch 4 des Winkelblechs 1 durchsetzender Führungsbolzen 8 eingeschraubt. In die Gewindebohrung 7b des Vorsprungs 6b ist eine den Ausschnitt 5 des abgewinkelten Schenkels 1a des Winkelblechs 1 durchsetzende Stellschraube 9 eingeschraubt. Es ist erkennbar, daß das Langloch 4 und die Stellschraube 9 zueinander parallel sind.

In den Fig. 1a und b ist die Spannrollenanordnung in der Montageposition gezeigt, in der sich das Winkelblech 1 gegenüber den beiden Vorsprüngen 6a, 6b des motorfesten Bauteils in einer abgesenkten Stellung befindet. In dieser abgesenkten Stellung des Winkelblechs 1 wird ein Keilrippenriemen 10 im ungespannten Zustand auf die Spannrolle 3 aufgelegt. Der Führungsbolzen 8 ist nur so stark angezogen, daß sich das Winkelblech 1 gegenüber dem Vorsprung 6a des motorfesten Teils verschieben läßt. Zum Spannen des Keilrippenriemens 10 wird die Stellschraube 9 in die Gewindebohrung 7b des Vorsprungs 6b eingeschraubt. Der Führungsbolzen 8 und die Stellschraube 9 wirken dabei gemeinsam als Führung für die Translationsverschiebung des Winkelblechs 1 und als Verdrehsicherung. Wenn die Stellschraube 9 in die Gewindebohrung 7b des Vorsprungs 6b eingeschraubt wird, dann wird der am Kopf der Stellschraube anliegende abgewinkelte Schenkel 1 a und damit das gesamte Winkelblech 1 zwangsläufig mitgenommen, d. h. in Spannrichtung des Keilrippenriemens 10 linear nach oben zu dem Vorsprung 6b hin bewegt. Die Stellschraube 9 wird soweit in den Vorsprung 6b des motorfesten Bauteils eingeschraubt, bis der abgewinkelte Schenkel 1a des Winkelblechs 1 an der Stützfläche des Vorsprungs 6b zur Anlage gelangt, wie in Fig. 1 c gezeigt. Daraufhin werden der Führungsbolzen 8 und die Stellschraube 9 festgezogen. In dieser durch die Anschlagfläche des Vorsprungs 6b des motorfesten Teils definierten Arbeitsposition des Winkelblechs 1 und damit der Spannrolle 3 ist der Riemen 10 auf seinen optimalen Betriebsspannwert vorgespannt. Der Arbeiter kann daher bei der Montage des Riemens 10 keinen Fehler machen, weil die Arbeitsposition des Winkelblechs 1 durch die vom Vorsprung 6b gebildete Anschlagfläche vorbestimmt ist. Dies setzt allerdings voraus, daß sich die von dem Vorsprung 6b gebildete Anschlagfläche für unterschiedlich ausgebildete Keilrippenriemen zur Erzielung des optimalen Betriebsspannwertes auf einem unterschiedlichen Niveau befinden muß.

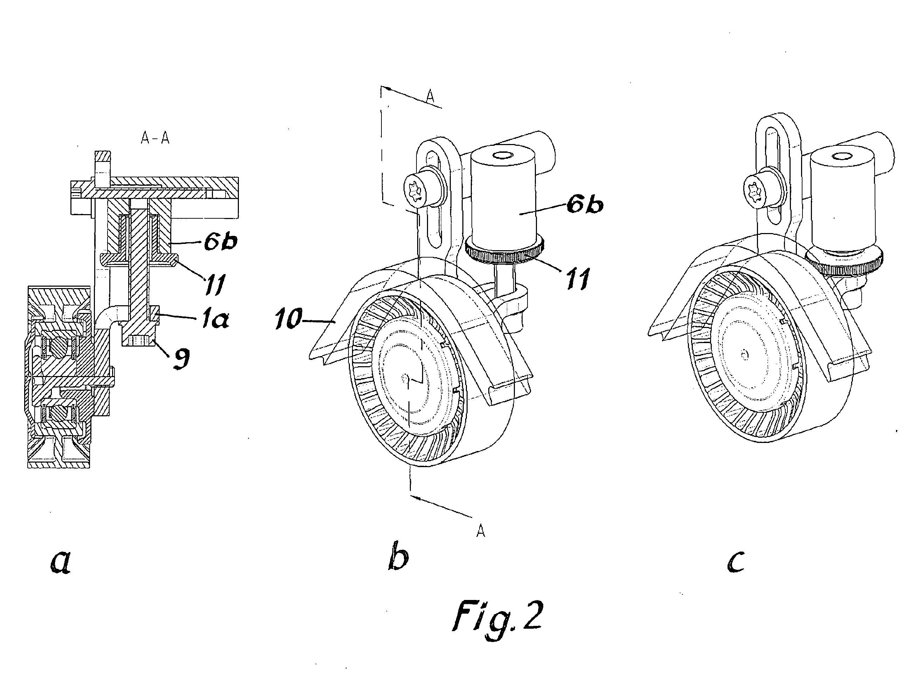

In den Fig. 2a, b und c ist eine zweite Ausführungsform einer Spannrollenanordnung dargestellt, die eine Anpassung an unterschiedlich ausgebildete Riemen ermöglicht, indem die von dem motorfesten Bauteil gebildete Anschlagfläche höhenverstellbar ausgebildet ist. Zu diesem Zweck ist in dem Vorsprung 6b des motorfesten Bauteils zusätzlich zu der Gewindebohrung eine Sackbohrung ausgebildet, in die eine Gewindemutter 11 eingeschraubt ist. Bei dieser Ausführungsform bildet die Gewindemutter 11 einen variablen Anschlag für den abgewinkelten Schenkel 1a des Winkelblechs 1.

Bei der Montage wird der Riemen 10 auf die Spannrolle 3 aufgelegt, wobei der Führungsbolzen 8 nur handfest angezogen ist. Die in den Vorsprung 6b eingeschraubte Gewindemutter 11 ist ebenfalls handfest angezogen. Daraufhin wird die Stellschraube 9 so weit in die Gewindebohrung des Vorsprungs 6b eingeschraubt, bis sich im Riemen 10 die gewünschte Vorspannkraft einstellt. Daraufhin wird die Gewindemutter 11 so weit aus der Sackbohrung des Vorsprungs 6b herausgedreht, bis sie an dem abgewinkelten Schenkel 1a des Winkelblechs 1 zur Anlage gelangt. Im Anschluß daran werden der Führungsbolzen 8 und die Stellschraube 9 mit einem vorgegebenen Anziehdrehmoment gesichert.

In Abwandlung der gezeigten Ausführungsform könnte der variable Anschlag auch mit einer Gewindemutter erzielt werden, die in eine in dem abgewinkelten Schenkel 1a des Winkelblechs 1 ausgebildete Gewindebohrung eingeschraubt ist. Aus fertigungstechnischen Gründen ist die Ausbildung einer Sackbohrung in dem Vorsprung 6b des motorfesten Bauteils jedoch vorteilhafter, weil das Winkelblech 1 als Stanzbauteil ausgeführt sein kann, das keine Nachbearbeitung erfordert.

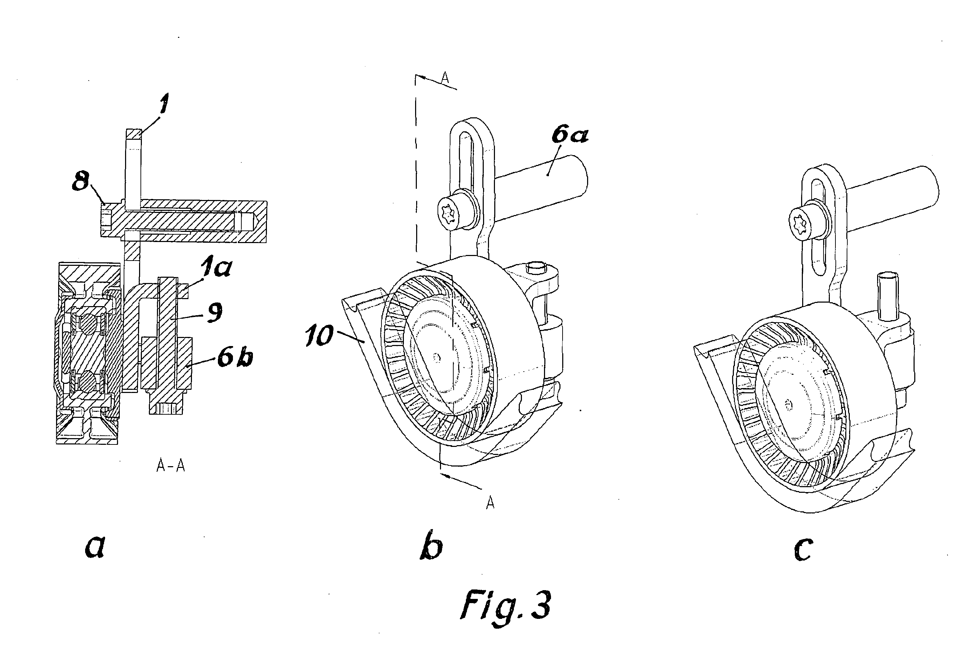

In Fig. 3 ist eine dritte Ausführungsform einer Spannrollenanordnung gezeigt. Hierbei handelt es sich gewissermaßen um die kinematische Umkehrung der Ausführungsform nach Fig. 1, indem die Gewindebohrung zur Aufnahme der Stellschraube 9 in dem abgewinkelten Schenkel 1 a des Winkelbauteils 1 angeordnet ist, wogegen im Vorsprung 6b eine Bohrung ausgebildet ist, in der die Stellschraube 9 frei drehbar ist.

Bei der in Fig. 3 gezeigten Ausführungsform einer Spannrollenanordnung liegt der Riemen 10 an der Unterseite der Spannrolle 3 an. In den Fig. 3a und b ist die Spannrolle 3 in der angehobenen Montagestellung dargestellt, in der sich der Führungsbolzen 8 nahe dem unteren Ende des in dem Winkelblech 1 ausgebildeten Langlochs 4 befindet. Nach dem Auflegen des Riemens 10 wird die Stellschraube 9 in Spannrichtung verdreht. Da sich die Stellschraube 9 mit ihrem Kopf an der Unterseite des Vorsprungs 6b abstützt, und das Winkelblech 1 an einer Verdrehung gehindert ist, wird das Winkelblech zwangsweise nach unten bewegt, wobei der Riemen 10 gespannt wird. Der Spannvorgang wird fortgesetzt, bis der abgewinkelte Schenkel 1a des Winkelblechs 1 an dem Vorsprung 6b des motorfesten Bauteils zur Anlage gelangt. Daraufhin werden die Stellschraube 9 und der Führungsbolzen 8 festgezogen.

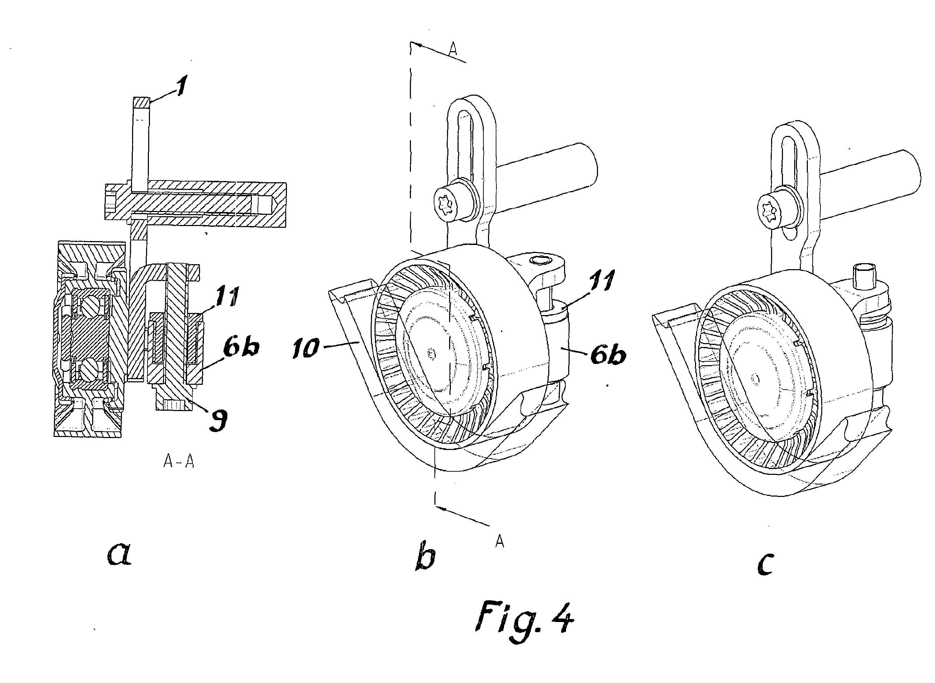

In Fig. 4 ist eine Abwandlung der Ausführungsform nach Fig. 3 gezeigt. Ähnlich wie bei der in Fig. 2 gezeigten Ausführungsform ist zur Bildung eines variablen Anschlags in dem Vorsprung 6b eine Gewinde-Sackbohrung ausgebildet, in die eine Gewindemutter 11 eingeschraubt ist. Die Funktionsweise dieser Ausführungsform entspricht grundsätzlich der in Fig. 2 gezeigten Ausführungsform, weshalb auf die entsprechenden Erläuterungen verwiesen werden kann.

Bei allen gezeigten Ausführungsformen der Spannrollenanordnung ist darauf zu achten, daß das in dem Winkelblech 1 ausgebildete Langloch 4 eine Linearbewegung des Winkelblechs relativ zu dem motorfesten Vorsprung 6b ermöglicht, bis die die vorgegebene Riemenspannung definierende Anschlagberührung eintritt.

### Bezugszeichenliste:

- 1: Winkelblech
- 1a: abgewinkelter Schenkel von 1
- 2: Lagerbolzen
- 3: Spannrolle
- 4: Langloch
- 5: Ausschnitt in 1
- 6a, b: Vorsprung
- 7a, b: Bohrung
- 8: Führungsbolzen
- 9: Stellschraube
- 10: Keilrippenriemen
- 11: Gewindemutter

## Patentansprüche

1. Spannrollenanordnung für einen Endlostrieb an einer Brennkraftmaschine, insbesondere Linearspanner für Keilrippenriemen, umfassend ein mit der Brennkraftmaschine starr verbundenes Abstützteil (6a, 6b), ein mit dem Abstützteil einstellbar verbundenes Lagerteil (1), eine in dem Lagerteil drehbar gelagerte Spannrolle (3) und ein sich am Abstützteil und am Lagerteil abstützendes Stellbauteil (9), **dadurch gekennzeichnet,**
**daß** im Abstützteil (6b) und im Lagerteil (1) zwei Bohrungen angeordnet sind, deren Achsen zur Drehachse der Spannrolle rechtwinklig sind, wobei eine der beiden Bohrungen als Gewindebohrung ausgebildet ist,
**daß** das Stellbauteil als Stellschraube (9) ausgebildet ist, die durch die Bohrung hindurch in die Gewindebohrung einschraubbar ist, wobei der Kopf der Stellschraube an dem die Bohrung aufweisenden Teil (Lagerteil oder Abstützteil) anliegt,
**daß** an dem Lagerteil (1) und an dem Abstützteil (6a) zur Drehachse der Stellschraube (9) parallele Anlageflächen angeordnet sind,
**daß** in einem Teil (Lagerteil oder Abstützteil) ein zur Achse der Stellschraube paralleles Langloch (4) angeordnet ist, und daß in dem anderen Teil (Abstützteil oder Lagerteil) eine mit dem Langloch deckungsgleiche Gewindebohrung (7a) angeordnet ist, und
**daß** ein das Langloch (4) durchsetzender Führungsbolzen (8) in die Gewindebohrung (7a) eingeschraubt ist.

2. Spannrollenanordnung nach Anspruch 1, **dadurch gekennzeichnet, daß** der Führungsbolzen (8) einen an dem das Langloch (4) aufweisenden Teil (Lagerteil oder Abstützteil) anliegenden Kopf hat.

3. Spannrollenanordnung nach Anspruch 1 oder 2, **dadurch gekennzeichnet, daß** das Lagerteil (1) oder das Abstützteil (6b) mit einer erweiterten Sackbohrung versehen ist, in die eine Gewindemutter (11) eingeschraubt ist, die eine Anlagefläche für das Abstützteil bzw. das Lagerteil bildet.

4. Spannrollenanordnung nach einem der Ansprüche 1 bis 3, **dadurch gekennzeichnet, daß** der Führungsbolzen (8) einen an dem das Langloch (4) aufweisenden Teil (Lagerteil oder Abstützteil) zur Anlage bringbaren Kopf hat.

5. Spannrollenanordnung nach einem der Ansprüche 1 bis 4, **dadurch gekennzeichnet, daß** das Langloch (4) im Lagerteil (1) und die damit deckungsgleiche Gewindebohrung (7a) im Abstützteil (6a) angeordnet ist.

6. Spannrollenanordnung nach einem der Ansprüche 1 bis 5, **dadurch gekennzeichnet, daß** das Lagerteil als Winkelblech (1) ausgebildet ist, wobei in dem abgewinkelten Schenkel (1a) die Bohrung (5) zur Aufnahme der Stellschraube (9) angeordnet ist.

7. Spannrollenanordnung nach Anspruch 6, **dadurch gekennzeichnet, daß** das Winkelblech (1) eine Gewindebohrung aufweist, in die ein die Spannrolle (3) tragender Lagerbolzen (2) eingeschraubt ist.
